# EUROPEAN PATENT SPECIFICATION

(11) **EP 0 800 634 B1**
(45) Date of publication and mention of the grant of the patent: **28.11.2001**
(21) Application number: 95942363.3
(22) Date of filing: 22.12.1995
(51) Int. Cl.: F16N 21/00, F01M 11/08

(54) **A JOINT DEVICE FOR A LUBRICATION SYSTEM AND A PUMP APPARATUS INCLUDING THE JOINT DEVICE**
VERBINDUNGSVORRICHTUNG FÜR EINE SCHMIERUNGSANLAGE UND PUMPENEINRICHTUNG MIT DIESER VERBINDUNGSVORRICHTUNG
ENSEMBLE JOINT POUR SYSTEME DE LUBRIFICATION ET DISPOSITIF DE POMPAGE COMPORTANT CET ENSEMBLE

(30) Priority: 28.12.1994 SE 9404544
(43) Date of publication of application: 15.10.1997
(73) Proprietor: ALFA LAVAL AGRI AB, 147 21 Tumba (SE)
(72) Inventor: MALECKI, Krzysztof, S-146 46 Tullinge (SE); SZYMANSKI, Waldemar, S-146 54 Tullinge (SE)
(74) Representative: Berglund, Stefan
(86) International application number: PCT/SE95/01572
(87) International publication number: WO 96/20367

(56) References cited:
- DE-A- 2 529 842
- DE-A- 3 711 000
- SE-B- 454 198

## Description

### FIELD OF THE INVENTION AND PRIOR ART

The present invention relates to a joint device for a lubricating system, which is intended to be insertable in a container with lubricant, and which comprises an outlet conduit for the removal of lubricant from the container and an inlet part for the supply of lubricant of the container. Moreover, the invention relates to a pump apparatus, preferably for producing a subpressure in a milking machine, comprising a pump, having a suction side arid a pressure side, and a lubrication device for lubricating the pump.

Today, milking machines operated by vacuum pumps are used in barns. In order to be able to guarantee a high and uniform milk production as well as the health of the animals, very high requirements are made on the reliability of these pumps. In order to obtain such a reliability, the lubrication of the pump and especially its bearings is very important.

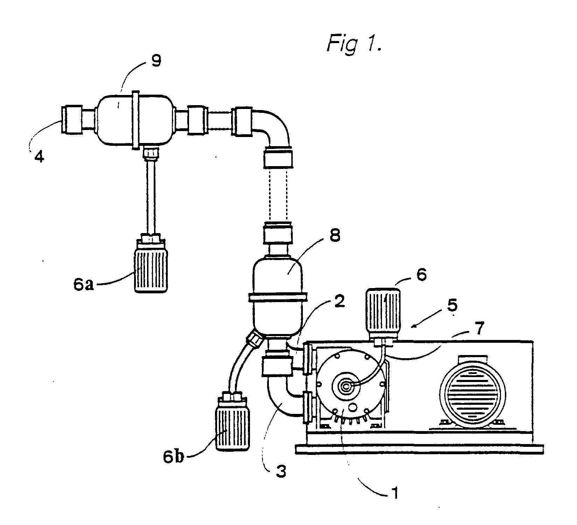

A usual type of pump device being used today is disclosed in Fig 1. The pump device comprises a vacuum pump 1 having a suction side 2 and a pressure side 3 terminating in an outlet tube 4. For the delivery of oil to the bearings of the vacuum pump a so called lubricator 5 is used, which comprises an oil container 6 and in its lower part an oil distributor, not shown. With the aid of the oil distributor, it is possible to guide the oil flow to the bearings via oil conduits 7. On the pressure side 3 of the vacuum pump is provided a silencer 8 and an oil trap 9. Both of them separate oil, which is carried by the air on the pressure side, to a respective container 6a and 6b. The use of this known pump device leads to the following problems. The container 6 provided on the lubricator 5 has to be filled with new oil before it is empty, in order to avoid that the bearings jam. Therefore, continuous supervision of the oil level in the container is necessary. The oil containers 6a and 6b, which are connected to the oil trap 9 and the silencer 8 and which collect the oil separated, also have to be continuously supervised in order to avoid that oil flows out on the floor. The oil flow through the lubricator 5 is controlled by means of a valve directly influencing the oil flow by throttling or opening a passage through which the oil is flowing. The oil amount delivered is very difficult to regulate exactly by means of such a valve. Consequently, this adjustment is done with low accuracy today. Furthermore, the outlets are sensitive to particles of dirt or thickened accumulations of oil, which easily may stop up the outlets. Since the oil flow from the known lubricator 5 may not be observed, it is very difficult to determine how much oil that has been delivered. The oil consumption increases drastically if for example any one of the shaft bearings of the vacuum pump is leaking. Since this increase may not be observed, such a leakage may lead to the breakdown of the bearings. Furthermore, the function of the lubricator 5 is very sensitive to a small inclination of the lubricator, since this results in an unequal distribution of oil to the different oil conduits 7, and thus to the different bearings of the pump. Furthermore, the lubricator 5 demonstrates an open construction, which gives rise to a risk for accumulation of dirt in the oil. Consequently, the bearings may be supplied with impurities. Moreover, the handling of this known lubricating system is relatively complicated, since the new container 6 with new oil has to be provided on the lubricator 5, when the oil in the old container runs out. Moreover, the containers 6a and 6b have to be replaced regularly, since separated oil is collected therein.

DE-A-3 711 000 discloses an oil container for combustion engines with dry sump lubrication. In order to reduce the noise, this oil container comprises return conduit having an orifice in a conical pipe. Thus, the mixture of oil and air, which is brought back to the oil container, may expand in the pipe and the oil is deposited on the wall of the pipe by means of a helicoidal movement. The oil to be transported from the container is sucked out through a separate pipe in the lower portion of the container.

FR-A-2 559 843 discloses a device for refining of oil. The device comprises a container having an inlet conduit leading to a first chamber with a sloping bottom wall. Impurities are collected in a lower space and oil is sucked out via an outlet conduit from a second chamber by means of a pump.

DE-B-2 732 474 discloses an oil suction socket for a lubricating system, which is intended to be inserted in a container with oil. The suction socket comprises an opening provided in the lower portion of the casing otherwise closed.

SE-B-454 198 discloses said lubricant container to be attached to an engine. Within said lubricant container, there is provided a second smaller container which encloses an outlet conduit for the removal af lubricant from said lubricant container and an inlet conduit for the supply of lubricant to said lubricant container. The second smaller container is not intended to be inserted in said lubricant container, but is an integrated fixed part of said lubricant container. SE-B-454 198 does not refer to any means for separating air from the lubricant supplied to said lubricant container.

DE-A-2 529 842 discloses lubricating system having a pump device to be immersed in a lubricant container. The pump device encloses an outlet means for the removal of lubricant to a machine to be lubricated, whereas the supply of lubricant to the container takes place by means of further conduit separated from the pump device.

### SUMMARY OF THE INVENTION

The object of the present invention is to overcome the problems mentioned above. In particular the present invention aims at a simplified handling and reduced supervision of the lubricating system.

This object is obtained by the joint device initially defined, wherein the joint device comprises a casing enclosing the outlet conduit and the inlet part, and wherein the inlet part comprises a separation means for separating air from the lubricant supplied. Furthermore the object of the invention is obtained by the pump apparatus initially defined, wherein the lubrication device comprises a lubricant container and a joint device insertable therein, wherein the joint device comprises a casing, which encloses an outlet means for the removal of lubricant from the lubricant container and an inlet means for bringing back lubricant used to the lubricant container, and wherein the inlet means comprises a separation means for separating air from the lubricant supplied.

Thus, by means of the present invention all lubricant used may be brought back to a container of a type which is available on the market. In this manner, the handling of the lubricating system is significantly facilitated; only the container need to be replaced. Furthermore, lubricant overflow, which is troublesome, may be avoided, since according to the invention the container used may be appropriately located and disposed in a suitable position, i.e. turned the right way round. Due to the lubricant being circulated in the lubricating system, the risk that one runs out of lubricant, and thus that the apparatus to be lubricated is damaged, is substantially non-existent, thereby making a continuous supervision superfluous. By the separation means, it is ensured that all lubricant which has been brought back also remains in the container.

Preferably, the separation means may be disposed in an upper portion of the joint device, which may be provided such that the upper portion, and thus the separation means, under all circumstances will be located above the lubricant level. Thereby, the separation means may always operate with a maximum effect. In a preferred embodiment, the separation means comprises an expansion chamber. According to a further development of this embodiment, the expansion chamber may comprise a sloping wall, which positively increases the efficiency of the expansion chamber.

Due to the provision of a lubricant filter disposed on the joint device, the point of time for the replacement of the oil container is not any longer critical.

By providing the joint device with an elongate shape and with a projection on the outer side of the casing, it may easily be inserted in an normal oil container.

### BRIEF DESCRIPTION OF THE DRAWINGS

The present invention will now be explained in more detail with reference to different embodiments, by way of example only, and with reference to the figures.
- Fig 1: shows a pump apparatus according to the state of the art.
- Fig 2: shows a pump apparatus according to the invention,
- Fig 3: shows a side view of the joint device according to the invention.
- Fig 4: shows a partly sectional front view of the joint device in Fig 3.
- Fig 5: shows a front view of a part of the joint device in Fig 3.
- Fig 6: shows a front view of another part of the joint device in Fig 3.
- Fig 7: shows a side view of a distribution device.
- Fig 8: shows a section of the distribution device along the line VIII-VIII in Fig 7.
- Fig 9: shows a view from above of the distribution device in Fig 7.
- Fig 10: shows another section of the upper portion of the distribution device.
- Fig 11: shows a side view of a distributor in the distribution device.
- Fig 12: shows another side view of the distributor according to Fig 11.

### DETAILED DESCRIPTION OF PREFERRED EMBODIMENTS OF THE INVENTION

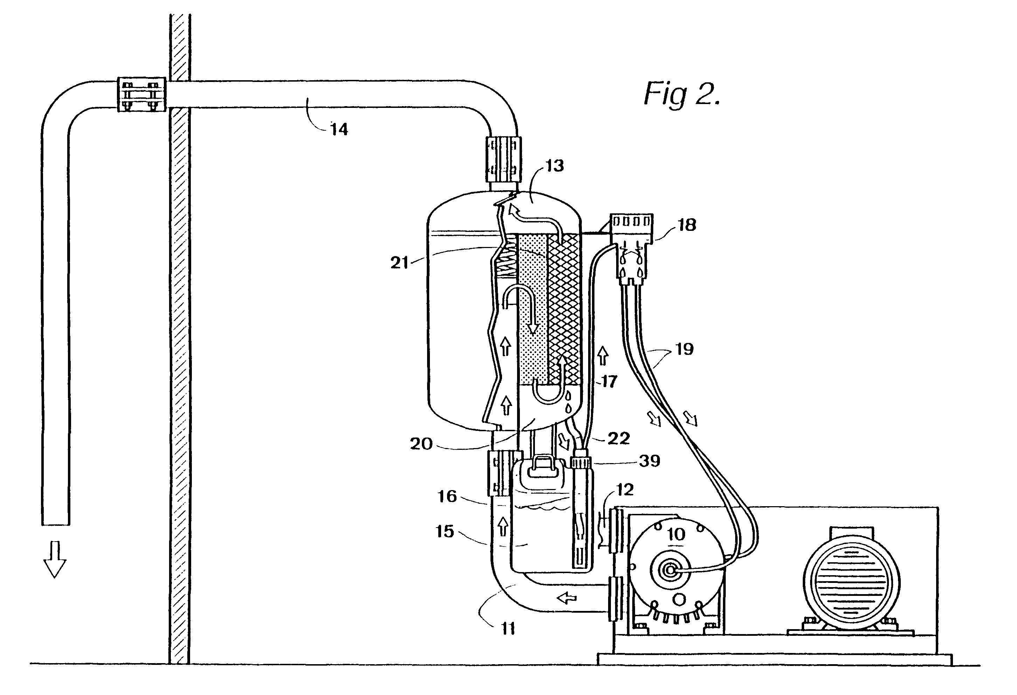

Fig 2 shows a pump apparatus comprising a pump 10 having a pressure side 11 and a suction side 12. On the pressure side 11 of the pump there is a combined silencer and oil separator 13, in the following called the oil separator 13, from which an outlet conduit 14 is leading the sucked air out through a wall. The pump 10, which in this case is driven by an electric motor, is provided with two shaft bearings. In order to ensure the function of the pump 10, these bearings must continuously be supplied with lubricant. To this end the pump apparatus comprises an oil container 15, which may be a usual plastic can being available on the market. A joint device 16 is inserted in the oil container 15. From the joint device 16 an oil conduit 17 is leading to a distribution device 18. In the distribution device 18, the incoming oil is separated, in this case, into two outlet conduits 19, conveying the oil to two bearings of the pump 10.

The air, mixed with oil and forced out from the pump 10 on its pressure side 11, is fed to the oil separator 13. Therein, the air is conveyed in an upward and downward movement such that it may expand in an expansion chamber 20. Oil, deposited on the walls in the expansion chamber 20 and collected by filtering means 21 provided in the expansion chamber, is transported via a discharge conduit 22 from the lowest part of the oil separator 13 back to the oil container 15. Because an overpressure prevails in the oil separator 13, air and oil will be forced through the conduit 22 back to the container 15. The system is open, i.e. the pressure may be equalized with the atmospheric pressure at the opening of the container 15.

The bearings of the pump 10 communicate with the suction side 12 of the pump 10, such that the pump 10 will produce a subpressure in the oil conduits 19, whereby oil will be sucked from the container 15 via the conduit 17 to the distribution device 18 and therefrom to the bearings of the pump via the conduits 19.

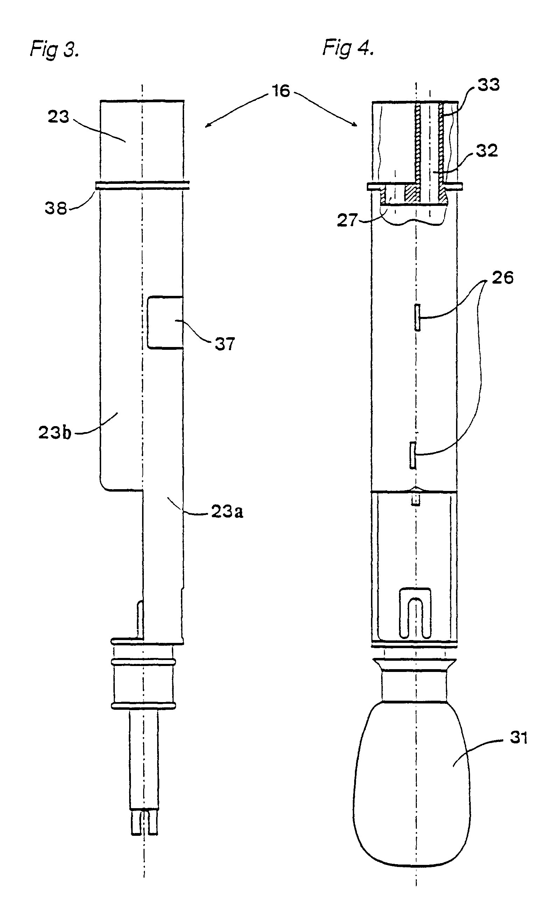

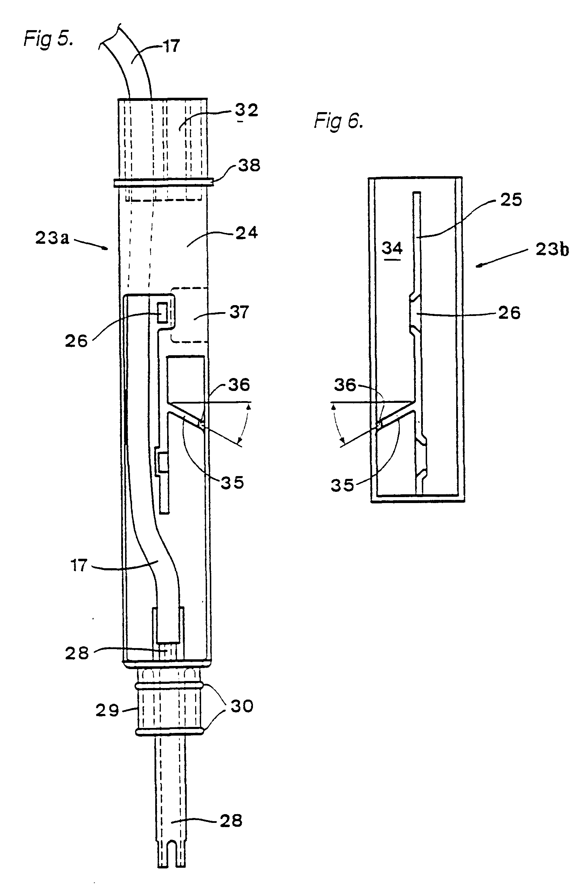

The joint device 16 will now be described in more detail with reference to Figs 3 - 6. The joint device 16 comprises an essentially cylindrical casing 23 comprising two parts 23a and 23b, for reasons of manufacture. The part 23a comprises a middle portion having a semi-cylindrical shape. An intermediate partition 24 extends between parallel outer edges of the semi-cylindrical middle portion. The part 23b has a semi-cylindrical shape as well and comprises an inner partition 25 dividing the room, partly enclosed by the semi-cylindrical part 23b, into two sub-rooms of essentially equal size. Of course, it is also possible to produce the casing 23 in one single part. The two parts 23a, 23b of the casing are, in the example disclosed, connected to each other by hook-shaped means 26. Other types of connecting means may also be used. The oil conduit 17 extends through an opening 27 in the upper portion of the joint device 16, said conduit being connected to an inlet channel 28 disposed in the lower portion of the joint device 16. At the outer bottom surface of the joint device 16, there is provided the orifice of the inlet channel 28. Furthermore, the joint device 16 is provided with a cylindrical envelope surface 29 extending around the inlet channel 28 and comprising flanges 30 or similar projections for the attachment of an oil filter 31, such that the oil filter covers the orifice of the inlet channel 28. An inlet means 32 is provided in the upper portion of the joint device 16 and comprises a pipe socket 33 having the conduit 22 attached thereon. The inlet means 32 extends to a separating means 24, 34 for separation of oil from the mixture of air and oil, which is supplied via the conduit 22. In the example disclosed, the orifice of the inlet means 32 is disposed in an expansion chamber 34 formed by the casing 23, and more precisely by the intermediate partition 24 of the part 23a and one of the sub-rooms of the part 23b. The expansion chamber 34 extends downwards to a sloping wall 35, which may slope 10 - 70 degrees, preferably 20 - 50 degrees, for example about 30 degrees with respect to a horizontal plan. In the lowest part of the sloping wall 35 is disposed an opening 36 leading to the container 15. The expansion chamber 34 extends from the sloping wall 35 back upwards on the other side of the intermediate partition 24, i.e. seen in Fig 5 the expansion chamber 34 extends upwards behind the intermediate partition 24. An opening 37, indicated by a dotted line in Fig 5, is provided on the other side of the intermediate partition 24 in the vertical outer wall of the part 23a.

The mixture of air and oil conveyed through the inlet means 32 via the supply conduit 22 expands in the expansion chamber 34, such that oil is deposited on the vertical walls and the sloping wall 35 of the expansion chamber 34. During the passage through the expansion chamber 34 the mixture of air and oil is subjected to a change of direction, i.e. is guided from a downward movement to an upward movement, whereby the oil being present in the air tends to continue in the first downward direction towards the sloping wall 35, due to forces of inertia and gravitation. Thereafter, the air may be removed through the opening 37 and the oil deposited is flowing downwards on the walls and through the opening 36, and back to the oil in the oil container 15.

A flange 38 or the like is provided on the outside of the casing 23 at the upper portion of the joint device 16. The flange has such a shape and dimension that it may rest against the edge of the opening of the container 15 when the joint device 16 is inserted in the container 15. The opening of the container 15 is provided in a socket having an external thread. By means of an attachment nut 39, see Fig 2, which may be threaded on the threaded socket, the joint device 16 may be fixed in the container 15. Thus, the joint device 16 is removably insertable in the container 15, such that it is partly immersed in the lubricant contained in the container. The opening of the container is provided on the top thereof, and hence the joint device is inserted by a downward movement.

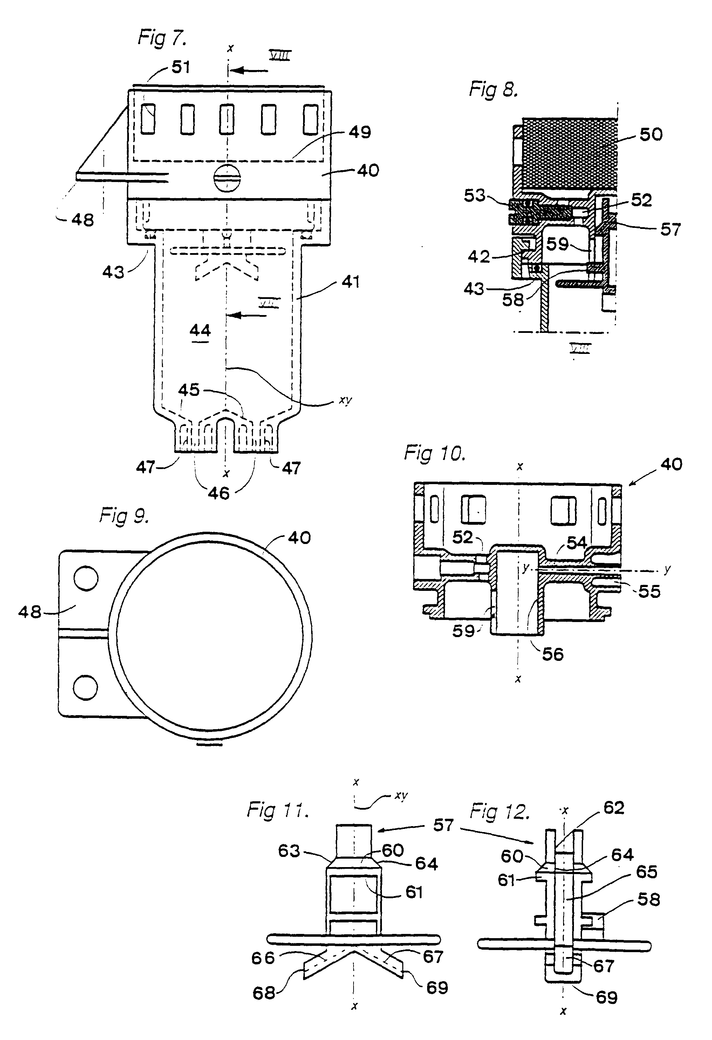

The distribution device 18 will now be described in more detail with reference to Figs 7 - 12. The distribution device 18 comprises an upper cylindrical portion 40 and a lower cylindrical portion 41. They are connected to each other preferably by means of a bayonet connection 42, which connects the two portions 40 and 41, and by means of a seal ring 43, seals the inner room 44 formed by the portions 41 and 42 against the atmosphere. The distribution device 18 comprises a longitudinal axis X-X being essentially vertical when the distribution device is in its normal operating position. The lower portion 41 is at least partly produced in a transparent material. At the inner bottom surface of the lower portion 41 there are provided two circular conical recesses 45. They are terminated in their lowest part in a respective outlet channel 46 comprising a pipe socket 47 having an orifice on the lower side of the lower portion 41. Each pipe socket 47 is connected to an oil conduit 19. The upper portion 40 is on its outer side provided with an attachment means 48 by which the distribution device 18 may be fixed in its normal operation position, and on its upper side provided with a recess 49 in which an air filter 50 is disposed. The air may be introduced from above or through openings 51 in the envelope surface of the upper portion. The upper portion 40 comprises a passage 52 through which atmospheric air may be sucked from the recess 49 into the inner room 44. The section area of the passage 52 may be adjusted by means of an adjustment screw 53 provided in the upper portion 40. When the screw 53 is screwed outwardly the passage 52 is opened and when it is screwed inwardly the passage 52 is throttled. Furthermore, the upper portion 40 comprises an inlet channel 54 which by means of a pipe socket 55 is connected to the oil conduit 17 from the joint device 16 and the oil container 15. The inlet channel 54 has an orifice in a circular cylindrical cavity 56 which is provided on the underside of the upper portion 40 and extends coaxially with the longitudinal axis X-X. A distributor 57 is provided in this cavity 56.

The distributor 57 may only be mounted in the cavity 56 with a predetermined orientation due to a pin 58 provided on a lower part of the distributor and a slot 59 provided in the cavity 56 to cooperate with the pin 58. When the distributor 57 is mounted in the cavity 56, the orifice of the inlet channel 54 is located opposite a peripheral surface 60 of the distributor 57, which is upwardly tapering and extends almost 180 degrees. This surface is in the example disclosed conical but may also be convex or concave, seen in a plan being parallel to the longitudinal axis X-X. The conical surface 60 has a central axis being coaxial with the longitudinal axis X-X and is symmetrically shaped with respect to a plan XY extending through a central axis Y-Y of the inlet channel 54 and the longitudinal axis X-X. The conical surface 60 is formed by a circular conical segment of the distributor 57. The circular conical segment changes in a downward direction to a circular cylindrical segment comprising a cylindrical envelope surface 61 abutting the wall of the circular cylindrical cavity 56. A circular conical segment and the circular cylindrical segment form parts of a plan surface 62 extending downwardly and parallel to the axis of the cavity 56. The end edges 63, 64 of the conical surface 60 define the beginning of the plan surface 62, such that an open gap 65 is formed and delimited by the plan surface 62 and another limitation which in the example disclosed, see Fig 12, is formed by a segment similarly formed with an envelope surface abutting the diametrically opposite wall of the cavity 56. The gap 65 extends downwardly to two sloping surfaces 66 and 67, diverging downwardly away from each other. The end edges 68, 69 of the surfaces 66, 67 are disposed straight above a respective outlet channel 46 when the distribution device 16 is vertically disposed.

Thus, the oil is sucked by the subpressure from the pump 10 through the inlet channel 54 and against the conical surface 60. Since the cylindrical envelope surface 61 abuts the wall of the cavity 56 the oil may only be further transported by flowing into different directions in the flow channel formed by the conical surface 60 and the wall of the cavity 56. Hence, the flow channel will have a downwardly tapering shape, i.e. the sides of the channel are converging downwardly and are joined together at the bottom of the channel. It has now been found that due to this particular shape exactly the same amount of oil will flow in each direction independent of a slight inclination of the distribution device. When the oil arrives at the end edges 63, 64 of the conical surface 60 it will flow downwards along the plan surface 62 in two separate paths. The oil from one of the end edges 63 will hit the sloping surface 66 and the oil from the other end edge 64 will hit the other sloping surface 67. Due to the inclination of these surfaces 66, 67, the oil may only flow outwards and downwards and an increased separation effect of the oil paths is obtained. The sloping surfaces 66, 67 end straight above a respective outlet channel 46. Due to the conical recesses 45 the oil from one of the sloping surfaces 66 will therefore be transported through one of the outlet channels 46 and the oil from the upper sloping surface 67 through the other outlet channel 46, although the distribution device would incline slightly. Since the end edges 68 and 69 are disposed at a relatively long distance from the conical recess 45, the dripping frequency to the two bearings may be easily observed and adjusted by means of the adjustment screw 53.

Although the peripheral upwardly tapering conical surface 60, the cylindrical envelope surface 61, and the cavity 56 are all circular in the example disclosed, they may also have another shape. For example, they may be oval. The plan surface 62 may also comprise a non plan shape, for example a convex shape.

## Claims

1. A joint device for a lubricating system, which is intended to be insertable in a container (15) with lubricant and which comprises an outlet conduit (17), for the removal of lubricant from the container (15), and an inlet part (32, 34, 36) for the supply of lubricant to the container (15),
wherein the joint device comprises a casing (23) enclosing the outlet conduit (17) and the inlet part, and
wherein the inlet part comprises a separation means (24, 34, 35) for separating air from the lubricant supplied.

2. A joint device according to claim 1, **characterized in that** it comprises an upper portion and a lower portion and that the separation means (24, 34, 35) is disposed in the upper portion.

3. A joint device according to claim 2, **characterized in that** the separation means (24, 34, 35) comprises an expansion chamber (34).

4. A joint device according to claim 3, charcterized in that the expansion chamber (34) has a lower limit comprising a sloping wall (35).

5. A joint device according to claim 4, **characterized in that** the sloping wall (35) has a lower portion, in which an opening (36) is provided.

6. A joint device according to any one of claims 3 to 5, **characterized in that** an opening (37) is provided in the casing (23), through which the expansion chamber (34) communicates with the environment.

7. A joint device according to any one of the preceding claims, **characterized in that** the outlet conduit (17) comprises an outlet channel extending through the casing.

8. A joint device according to claim 7, **characterized in that** the outlet channel communicates with the interior of the casing via a filter.

9. A joint device according to claim 2 to 8, **characterized in that** the joint device (16) has an elongated shape and comprises on its upper portion a projection (38) provided on the outer side of the casing (23) and formed such that the joint device (16) may rest against an opening edge provided in the container, when the joint device is inserted in the container (15).

10. A pump apparatus, preferably for producing a subpressure in a milking machine, comprising a pump (10), having a suction side (12) and a pressure side (11), and a lubrication device for lubricating the pump, wherein the lubrication device comprises a lubricant container (15) and a joint device insertable therein, wherein the joint device comprises a casing (23), which encloses an outlet means for the removal of lubricant from the lubricant container (15) and an inlet means for bringing back lubricant used to the lubricant container (15), and wherein the inlet means comprises a separation means (24, 34, 35) for separating air from the lubricant supplied.

11. A pump apparatus according to claim 10, **characterized in that** a further lubricant separator (13) is provided on the pressure side of the pump (10), and that the inlet means of the joint device (16) is connected to said further lubricant separator (13) and provided to deliver lubricant separated to the lubricant container (15).

12. A pump apparatus according to claim 10 or 11, **characterized in that** the pump (10) is connected to the lubricant container (15) via the outlet means of the joint device (16) such that an subpressure produced by the pump (10) is utilized to suck lubricant from the lubricant container (15) via the outlet means of the joint device.

## Patentansprüche

1. Verbindungsvorrichtung für ein Schmierungssystem, das vorgesehen ist zum Einsetzten in ein Behälter (15) mit einem Schmiermittel und das eine Auslassleitung (17) zum Entfernen des Schmiermittels von Behälter (15) sowie einen Einlassteil (32, 34, 36) für die Zufuhr von Schmiermittel an den Behälter (15) umfaßt,
wobei die Verbindungsvorrichtung ein Gehäuse (23) umfaßt, das die Auslassleitung (17) und den Einlassteil umschließt und
wobei der Einlassteil eine Trenneinrichtung (24, 34, 35) zum Trennen von Luft vom zugeführten Schmiermittel umfaßt.

2. Verbindungsvorrichtung nach Anspruch 1, **dadurch gekennzeichnet, daß** sie einen oberen Abschnitt und einen unteren Abschnitt umfaßt und daß die Trenneinrichtung (24, 34, 35) im oberen Abschnitt angeordnet ist.

3. Verbindungsvorrichtung nach Anspruch 1, **dadurch gekennzeichnet, daß** die Trenneinrichtung (24, 34, 35) eine Expansionskammer (34) umfaßt.

4. Verbindungsvorrichtung nach Anspruch 3, **dadurch gekennzeichnet, daß** die Expansionskammer (34) eine untere Begrenzung hat, die eine abfallende Wand (35) umfaßt.

5. Verbindungsvorrichtung nach Anspruch 4, **dadurch gekennzeichnet, daß** die abfallende Wand (35) einen unteren Abschnitt aufweist, in dem eine Öffnung (36) vorgesehen ist.

6. Verbindungsvorrichtung nach einem der Ansprüche 1 bis 5, **dadurch gekennzeichnet, daß** im Gehäuse (23) eine Öffnung (37) vorgesehen ist, durch die die Expansionskammer (34) mit der Umgebung in Verbindung steht.

7. Verbindungsvorrichtung nach einem der vorangegangenen Ansprüche, **dadurch gekennzeichnet, daß** die Auslassleitung (17) ein Auslasskanal umfaßt, der sich durch das Gehäuse erstreckt.

8. Verbindungsvorrichtung nach Anspruch 7, **dadurch gekennzeichnet, daß** der Auslasskanal mit dem Inneren des Gehäuses über ein Filter in Verbindung steht.

9. Verbindungsvorrichtung nach Anspruch 2 - 8, **dadurch gekennzeichnet, daß** die Verbindungsvorrichtung (16) eine längliche Form hat und in ihrem oberen Abschnitt einen Vorsprung (38) umfaßt, der der Außenseite des Gehäuses (23) vorgesehen ist und so geformt ist, daß die Verbindungsvorrichtung (16) gegen eine im Behälter vorgesehen Öffnungskante ruhen kann, wenn die Verbindungsvorrichtung in den Behälter (15) eingesetzt wird.

10. Pumpenvorrichtung, vorzugsweise zum Erzeugen eines Unterdrucks in einer Melkmaschine, mit einer Pumpe (10), die eine Saugseite (12) und eine Druckseite (11) aufweist, sowie eine Schmierungsvorrichtung zum Schmieren der Pumpe wobei die Schmierungsvorrichtung einen Schmiermittelbehälter (15) und eine darin einsetzbare Verbindungsvorrichtung umfaßt, wobei die Verbindungsvorrichtung ein Gehäuse (23) umfaßt, das eine Auslassvorrichtung zum Entfernen des Schmiermittels vom Schmiermittelbehälter (15) sowie eine Einlassvorrichtung zum Rückführen des Schmiermittels an den Schmiermittelbehälter (15) einschließt, und wobei die Einlassvorrichtung eine Trenneinrichtung (24, 34, 35) zum Trennen von Luft vom zugeführten Schmiermittel umfaßt.

11. Pumpenvorrichtung nach Anspruch 10, **dadurch gekennzeichnet, daß** auf der Druckseite der Pumpe (10) eine weitere Schmiermitteltrennvorrichtung (13) vorgesehen ist, und daß die Einlassvorrichtung der Verbindungsvorrichtung (16) mit dieser weiteren Schmiermitteltrennvorrichtung (13) verbunden ist und der Schmiermittelbehälter (15) das abgetrennte Schmiermittel zuführt.

12. Pumpenvorrichtung nach Anspruch 10 oder 11, **dadurch gekennzeichnet, daß** die Pumpe (10) mit dem Schmiermittelbehälter (15) auf eine solche Weise über die Auslassvorrichtung (16) verbunden ist, daß eine von der Pumpe (10) erzeugte Unterdruck verwendet wird, um das Schmiermittel vom Schmiermittelbehälter (15) über die Auslasseinrichtung der Verbindungsvorrichtung zu saugen.

## Revendications

1. Dispositif commun pour un système de lubrification, qui est désigné pour être inséré dans un container (15) avec du lubrifiant et qui comprend un conduit de sortie (17), pour le transport du lubrifiant à partir du container (15), et une partie d'entrée (32, 34, 36) pour l'alimentation de lubrifiant dans le container (15),
dans lequel le dispositif commun comprend un boîtier (23) renferment le conduit de sortie (17) et la partie d'entrée, et
dans lequel la partie d'entrée comprend un moyen de séparation (24, 34, 35) pour séparer l'air du lubrifiant alimenté.

2. Dispositif commun selon la revendication 1, **caractérisé en ce qu'**il comprend une partie supérieure et une partie inférieure et **en ce que** le moyen de séparation (24, 34, 35) est disposé sur la partie supérieure.

3. Dispositif commun selon la revendication 2, **caractérisé en ce que** le moyen de séparation (24, 34, 35) comprend une chambre d'expansion (34).

4. Dispositif commun selon la revendication 3, **caractérisé en ce que** la chambre d'expansion (34) présente une limite inférieure comprenant une paroi inclinée (35).

5. Dispositif commun selon la revendication 4, **caractérisé en ce que** la paroi inclinée (35) présente une partie inférieure, dans laquelle une ouverture (36) est prévue.

6. Dispositif commun selon l'une quelconque des revendications 3 à 5, **caractérisé en ce qu'**une ouverture (37) est prévue dans le boîtier (23), à travers laquelle la chambre d'expansion communique avec l'environnement.

7. Dispositif commun selon l'une quelconque des revendications précédentes, **caractérisé en ce que** le conduit de sortie (17) comprend un canal extérieur s'étendant à travers le boîtier.

8. Dispositif commun selon la revendication 7, **caractérisé en ce que** le canal de sortie communique avec l'intérieur du boîtier via un filtre.

9. Dispositif commun selon les revendications 2 à 8, **caractérisé en ce que** le dispositif commun (16) présente une forme allongée et comprend sur sa partie supérieure une projection (38) prévue sur le côté extérieur du boîtier (23) et formée de telle manière que le dispositif commun (16) peut reposer contre un rebord d'ouverture prévu dans le container, quand le dispositif commun est inséré dans le container (15).

10. Dispositif de pompe, de préférence pour produire une sous-pression dans une trayeuse, comprenant une pompe (10), présentant un côté d'aspiration et un côté à pression (11), et un dispositif de lubrification pour lubrifier la pompe, dans lequel le dispositif de lubrification comprend un container à lubrifiant (15) et un dispositif commun insérable à l'intérieur, dans lequel le dispositif commun comprend un boîtier (23) qui renferme un moyen extérieur pour le transport de lubrifiant à partir du container à lubrifiant (15) et un moyen d'entrée pour ramener le lubrifiant utilisé vers le container à lubrifiant (15), et dans lequel le moyen d'entrée comprend un moyen de séparation (24, 34, 35) pour séparer l'air du lubrifiant alimenté.

11. Dispositif de pompe selon la revendication 10, **caractérisé en ce que** un autre séparateur de lubrifiant (13) est prévu sur le côté de pression de la pompe (10), et **en ce que** le moyen de sortie du dispositif commun (16) est connecté audit autre séparateur de lubrifiant (13) et est prévu pour délivrer du lubrifiant séparé au container à lubrifiant (15).

12. Dispositif de pompe selon l'une quelconque des revendications 10 ou 11, **caractérisé en ce que** la pompe (10) est connectée au container à lubrifiant (15) via le moyen de sortie du dispositif commun (16) de telle manière qu'une sous-pression produite par la pompe (10) est utilisée pour aspirer le lubrifiant à partir du container à lubrifiant (15) via le moyen de sortie du dispositif commun.
